# EUROPEAN PATENT APPLICATION

(11) **EP 3 419 258 A1**
(43) Date of publication of application: **26.12.2018**
(21) Application number: 18188129.3
(22) Date of filing: 28.09.2011
(51) Int. Cl.: H04M 1/60, H04R 1/10

(54) **CONTROLLING POWER FOR A HEADSET**

(62) Divisional of application: 11773320.4
(71) Applicant: Sony Ericsson Mobile Communications AB, 221 88 Lund (SE)
(72) Inventor: KLINGHULT, Gunnar, 22359 Lund (SE); RODZEVSKI, Alexandar, 21113 Malmö (SE)
(74) Representative: Neusser, Sebastian

(57) **Abstract**

A headset device includes a component to monitor a predetermined proximity of the headset device. The predetermined proximity includes an area where a user of the headset is positioned during operation of the headset. The headset device includes a processor to execute instructions to monitor the predetermined proximity of the headset. The processor is also to determine whether a detectable object is within the predetermined proximity of the headset based on a characteristic property of the detectable object. The characteristic property of the detectable object is one of a black body emitting property or a conducting property. Additionally, the processor is to place the headset into an active state when it is determined that the detectable object is within the predetermined proximity, and place the headset into a standby state when it is determined that the detectable object is not within the predetermined proximity.

## Description

### TECHNICAL FIELD OF THE INVENTION

The invention relates generally to identifying an object associated with a headphone device, more particularly, to detecting an object positioned in proximity to one or more headphones.

### DESCRIPTION OF RELATED ART

Active headsets typically include both analog and digital components. The analog components may process physical audio signals (such as filtering, amplifying, over voltage protection, etc.) and the digital components may be used for wireless communication (e.g., Bluetooth ® (BT), WiFi) and other "intelligent logic" processes (i.e., application-specific signal processing, audio effects management, power handling, etc.). The digital components may require a power supply, such as a driving voltage, in order to operate. The rate at which the digital components consume power is known to vary with applications and use cases. However, in many instances, power considerations for the headset impose limitations on power consumption and require that the headset be minimally in an active state.

### SUMMARY

In one implementation, computer-implemented method for controlling power in a headset may include monitoring a predetermined proximity of the headset, wherein the predetermined proximity includes an area within which a user is positioned during operation of the headset, determining whether a detectable object is within the predetermined proximity of the headset based on a characteristic property of the detectable object, wherein the characteristic property of the detectable object is one of a black body emitting property or a conducting property, generating an electric field that substantially overlaps the predetermined proximity, and placing the headset into a standby state when it is determined that the detectable object is not within the predetermined proximity.

In addition, the active state may include a state in which the headset consumes substantially more power than power consumed by the headset in the standby state. Placing the headset into the active state may be either activating the headset to the active state or maintaining the headset in the active state and placing the headset into the standby state may be either deactivating the headset to the standby state or maintaining the headset in the standby state.

In addition, placing the headset into the active state may include activating at least one of a communication process, an application specific signal process, a power handling process, an audio effects process, and a sensor process.

In addition, placing the headset into the active state may include one of activating or deactivating an associated user device.

In addition, when the characteristic property of the detectable object is the conducting property, determining whether a detectable object is within a predetermined proximity of the headset may further include generating an electric field that substantially overlaps the predetermined proximity, and detecting that the detectable object is within the predetermined proximity based on an interaction of the detectable object with the electric field.

In addition, detecting that the detectable object is within the predetermined proximity may further include comparing a voltage generated by the electric field with a threshold voltage to detect the detectable object.

In addition, detecting that the detectable object is within the predetermined proximity may further include measuring a voltage generated by the electric field using an analog to digital converter, and determining a distance from the headset to the detachable object based on the measured voltage.

In addition, detecting that the detectable object is within the predetermined proximity may further include detecting that the detectable object is within the predetermined proximity using synchronous detection.

In addition, when the characteristic property of the detectable object is the black body emitting property, determining whether a detectable object is within a predetermined proximity of the headset may further include monitoring the predetermined proximity for black body radiation, and detecting that the detectable object is within the predetermined proximity based on the black body radiation.

In addition, the predetermined proximity may be monitored for black body radiation with a wavelength substantially of an order of 5 microns to 10 microns.

In another implementation, a headset device may include a component to monitor a predetermined proximity of the headset device, wherein the predetermined proximity includes an area within which a user is positioned during operation of the headset, a memory to store a plurality of instructions; and a processor configured to execute instructions in the memory to monitor the predetermined proximity of the headset, determine whether a detectable object is within the predetermined proximity of the headset based on a characteristic property of the detectable object, wherein the characteristic property of the detectable object is one of a black body emitting property or a conducting property, place the headset into an active state when it is determined that the detectable object is within the predetermined proximity, and place the headset into a standby state when it is determined that the detectable object is not within the predetermined proximity.

In addition, when placing the headset into the active state, the processor is further to activate at least one of a communication process, an application specific signal process, a power handling process, an audio effects process, and a sensor process.

In addition, when placing the headset into the active state, the processor is further to activate or deactivate an associated user device.

In addition, when the characteristic property of the detectable object is the conducting property and wherein when determining whether a detectable object is within a predetermined proximity of the headset, the processor is further to generate an electric field that substantially overlaps the predetermined proximity, and detect that the detectable object is within the predetermined proximity based on an interaction of the detectable object with the electric field.

In addition, when detecting that the detectable object is within the predetermined proximity, the processor is further to compare a voltage generated by the electric field with a threshold voltage to detect the detectable object.

In addition, when the characteristic property of the detectable object is the black body emitting property, when determining whether the detectable object is within the predetermined proximity of the headset, the processor is further to monitor the predetermined proximity for black body radiation, and detect that the detectable object is within the predetermined proximity based on the black body radiation.

In addition, headset device may be one of an on-ear design headset or an in-ear design headset.

In yet another implementation, a computer-readable medium includes instructions to be executed by a processor, the instructions including one or more instructions, when executed by the processor, for causing the processor to monitor a predetermined proximity of the headset, wherein the predetermined proximity includes an area within which a user is positioned during operation of the headset, determine whether a detectable object is within the predetermined proximity of the headset based on a characteristic property of the detectable object, wherein the characteristic property of the detectable object is one of a black body emitting property or a conducting property, place the headset into an active state when it is determined that the detectable object is within the predetermined proximity, and place the headset into a standby state when it is determined that the detectable object is not within the predetermined proximity.

In addition, when the characteristic property of the detectable object is the conducting property, when determining whether the detectable object is within the predetermined proximity the computer-readable medium may further include instructions to generate an electric field that substantially overlaps the predetermined proximity, and detect that the detectable object is within the predetermined proximity based on an interaction of the detectable object with the electric field.

In addition, when the characteristic property of the detectable object is the black body emitting property, when determining whether the detectable object is within the predetermined proximity the computer-readable medium may further include instructions to monitor the predetermined proximity for black body radiation, and detect that the detectable object is within the predetermined proximity based on the black body radiation.

### BRIEF DESCRIPTION OF THE DRAWINGS

The accompanying drawings, which are incorporated in and constitute part of this specification, illustrate one or more embodiments described herein and, together with the description, explain the embodiments. In the drawings:
Fig. 1 illustrates concepts described herein for controlling power for a headset;
Figs. 2A and 2B illustrate concepts of electric field detection of a conducting object described herein;
Figs. 2C, 2D, and 2E illustrate exemplary circuit diagrams representing electric field detection of a conducting object described herein;
Fig. 3 illustrates concepts of long-wave infrared detection of a detectable object described herein;
Figs. 4A and 4B illustrate exemplary headphones consistent with embodiments described herein;
Fig. 5 is a block diagram of exemplary components of a device of Figs. 1- 4B; and
Fig. 6 is a flow diagram of an exemplary process of controlling power for a headset in a manner consistent with implementations described herein.

### DETAILED DESCRIPTION

The following detailed description refers to the accompanying drawings. The same reference numbers in different drawings may identify the same or similar elements. Also, the following detailed description is exemplary and explanatory only and is not restrictive of the invention, as claimed.

Embodiments described herein relate to devices, methods, and systems for controlling power for a headset. For example, a predetermined proximity of a headset may be monitored for a detectable object. The presence of the headset detectable object within the predetermine proximity may be determined based on characteristic properties of the detectable object. Power consumption for the headset and associated devices and systems may be controlled based on the detected proximity of the detectable object.

Consistent with embodiments described herein, a headset proximity detector may be implemented using a long-wave infrared (IR) proximity detector. Alternatively, consistent with embodiments described herein, the headset proximity detector may be implemented using an electrical field detector. Embodiments of the headset proximity detector may be implemented with low power consumption (some tenths of micro ampere pA) that may significantly reduce power consumption of the headset in comparison to headsets that have all (or most) electronic components active at all times or requiring manual shut down, hence making this a good power solution for "always on" devices. Both embodiments may be implemented for controlling a host system power. The headset proximity detectors may be implemented as a robust and power efficient solution with a reliable performance.

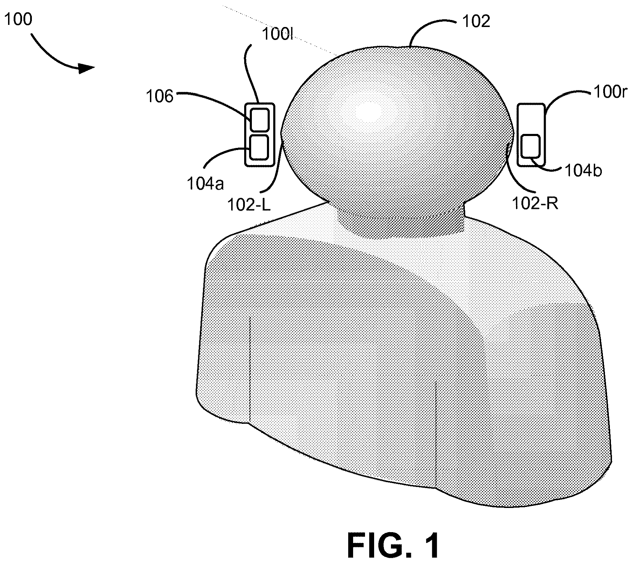

Fig. 1 illustrates concepts described herein. More specifically, Fig. 1 shows an exemplary headset 100 consistent with embodiments described herein. Headset 100 may include a left headphone 100-L, which may be positioned in proximity to a left ear 102-I of a user 102, and a right headphone 100-R, which may be positioned in proximity to a right ear 102-r of user 102. Each of headphones 100-L and 100-R may include headset proximity detectors 104-a and 104-b respectively. Headset 100 may also include a microcontroller unit (MCU) 106 that interfaces with headset proximity detectors 104-a and 104-b. The configuration of components of headset 100 illustrated in Fig. 1 is for illustrative purposes only. Although not shown, headset 100 may include additional, fewer and/or different components than those depicted in Fig. 1. Headset 100 may also include other components of a headset 100 and/or other configurations may be implemented. For example, headset 100 may include speakers, security devices, one or more network interfaces, such as interfaces for receiving and sending information from/to other devices, one or more processors, etc.

Headset 100 may be placed in an active state when headphone 100-L and/or headphone 100-R is positioned within a predetermined proximity of a detectable object having particular properties, such as user 102. The predetermined proximity may be an area that a user 102 may be positioned within during operation of headset 100. The predetermined proximity may also be an area within which the detectable object (i.e., user 102) may be detected. The predetermined proximity may also be determined based upon operational considerations of headset 100. For example, the predetermined proximity may be calibrated to be approximately equal to a maximum distance from each of headphones 100-L and 100-R and left ear 102-1 and right ear 102-r, respectively, when headset 100 is placed in operation (i.e., when user 102 puts headset 100 on their head).

The active state may be a state in which particular processes associated with headset 100 become active (or increase activity). The power consumption of headset 100 may be substantially (or more than minimally) increased as the processes become active. For example, digital components of headset 100 may consume increased power consumption in the active state in order to execute functions, such as sensing, and other "intelligent logic" processes including wireless communication and application signal processing. Headset 100 may activate one or more of a communication process, an application specific signal process, a power handling process, an audio effects process, or a sensor process, when headset 100 is placed in the active state. Headset 100 may activate or deactivate one or more associated user devices when put into the active state.

Headset 100 may be placed in a standby state when headphone 100-L and/or headphone 100-R is not within the predetermined proximity of the detectable object. The standby state may be a state in which particular processes become inactive or unavailable for headset 100 while proximity detectors 104a-104b continue to monitor for the presence of the detectable object within the predetermined proximity. The standby state may comprise a mode in which electronic components in headset 100 (and related devices) consume less power and provide reduced functionality. For example, audio effects management, signal processing, and wireless communication may be unavailable while headset 100 is in the standby state. The active state may be a state in which headset 100 consumes substantially more power than power consumed by headset 100 in the standby state.

Proximity detectors 104-a and 104-b may determine whether headset 100 is within the predetermined proximity of the detectable object (or the detectable object is within the predetermined proximity of headset 100) based on a characteristic property or properties of the detectable object. Proximity detectors 104-a and 104-b may detect the proximity of the detectable object while in either the active or the standby state. For instance, proximity detectors 104-a and 104-b may determine that headset 100 is within the predetermined proximity based on a mass and a conducting property of the detectable object (e.g., user 102) as described below with regard to electric field proximity detector 200 and related embodiments. Alternatively, proximity detectors 104-a and 104-b may determine that headset 100 is within the predetermined proximity of the detectable object based on a mass and a black body radiation emitting property of the detectable object as described with regard to long wave infrared detector 300. Proximity detectors 104-a and 104-b may generate an event based on a change in the position of headset 100 in relation to the detectable object (i.e., movement of one or both of the detectable object and headset 100 in relation to each other). For example, proximity detectors 104 may generate an event when the detectable object is moved from (or to) the predetermined proximity of headset 100.

MCU 106 may receive the event generated by proximity detectors 104a-104b and change a state of headset 100 based on the received event. For example, MCU 106 may be included (or integrated) with or operably connected to proximity detectors 104-a and 104-b and may receive the generated event as a wireless signal, an interrupt, etc. MCU 106 may change the state of headset 100 from active state to standby state or, vice versa, standby state to active state, based on the received event. For example, headset 100 may be in an active state when the detectable object is within the predetermined proximity of headset 100. In response to a generated event indicating a change in position of the detectable object from within the predetermined proximity of headset 100, MCU 106 may change the state of headset 100 to the standby state from the active state. MCU 106 may set all electronic components in headset 100 to standby state, with the exception of proximity detectors 104a-104b, upon receiving the generated event.

Headset 100 may use MCU 106 and proximity detectors 104a-104b to control the power consumption for headset 100 and/or an operably connected device or system (not shown) based on whether headset 100 is in the active state or the standby state. For instance, headset 100 may include an application (e.g., BT) that is powered on whenever user 102 puts on headset 100 and headset 100 is placed in the active state (i.e., a detectable object is detected within the predetermined proximity). The application may activate or deactivate particular user devices and particular processes or functions of the user devices when the state of headset 100 changes from the active state to the passive state (or vice versa). For example, when headset 100 changes from the active state to the standby state, an associated user device (e.g., a mobile phone with which the BT function of headset 100 is associated) may switch to speaker mode, i.e., the user device powers on when user 102 removes headset 100. The application may deactivate the user device when user 102 puts on headset 100 and headset 100 changes back to the active mode.

According to an embodiment, headset 100 may include a plurality of different sensors that may be utilized when user 102 puts on headset 100, i.e. even without playback, the sensors may effectively function as "always on" from user's 102 perspective. Proximity detectors 104-a and 104-b may allow headset 100 to reduce power consumption in this instance. Additionally, MCU 106 and proximity detectors 104a-104b may combine to control a wireless data bearer (not shown) for headset 100, i.e. MCU 106 may turn a wireless electronic block (or component) for the wireless data bearer on/off based on generated events and enable the communication protocol of the wireless bearer only when headset 100 is mounted.

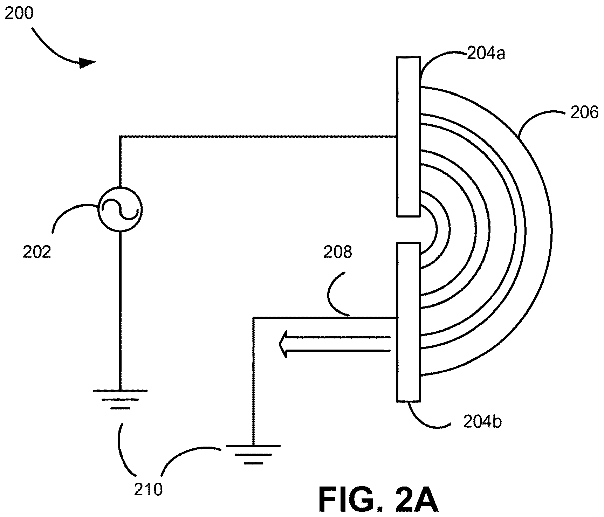

Figs. 2A-2D, illustrate concepts of electric field detection of a conducting object described herein. Figs. 2A-2D include an electric field proximity detector 200 that may include a voltage source 202, an antenna 204 (including electrodes 204-a and 204-b that are grounded 210), and an electric field 206 generated by electric field proximity detector 200. Electric field proximity detector 200 may be an implementation of proximity detector 104. The configuration of components of electric field proximity detector 200 illustrated in Figs. 2A-2D is for illustrative purposes only. Although not shown, electric field proximity detector 200 may include additional, fewer and/or different components than those depicted in Figs. 2A-2D.

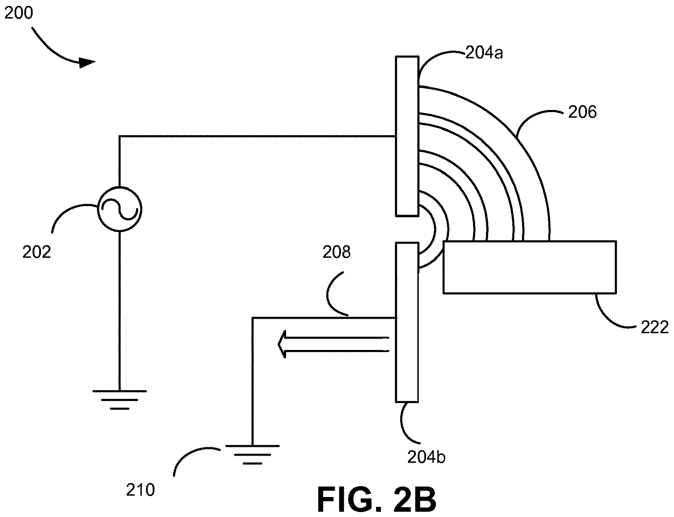

Fig. 2A shows electric field 206 before and Fig. 2B shows electric field 206 after a conducting body 222 (which may also be grounded 210) has been introduced to electric field 206. Conducting body 222 may be determined/defined as the detectable object that electric field proximity detector 200 is monitoring for, i.e., a person, such as user 102, may be defined/act as conducting body 222. Electric field 206 may be used to determine the predetermined proximity of headset 100. A current (I) 208 may flow across electrodes 204-a and 204-b based on voltages supplied by voltage source 202. Antenna 204 may be a pair of half circle antennas.

Voltage source 202 may generate electric field 206 between electrodes 204-a and 204-b. Voltage source 202 may be a low frequency (radio frequency (RF), low voltage source that is orders of magnitude below current health and regulatory guidelines for communications applications (e.g., Federal Communications Commission (FCC) guidelines). Electrodes 204-a and 204-b may be two metallic plates or conducting areas (e.g., graphite, indium-tin-oxide (ITO)) that may be molded in, or covered by, plastic and integrated into headset 100. The location of electrodes 204-a and 204-b in relation to the head of user 102 (the detectable object) may be determined with some flexibility based on design considerations as user 102's head may be substantially larger than the antennas 204.

Electric field proximity detector 200 may generate electric field 206 to overlap or encompass an area around electric field proximity detector 200 that corresponds to the desired predetermined proximity. Electric field proximity detector 200 may detect conducting body 222 within electric field 206 based on any of a plurality of electric field detection principles. For example, electric field proximity detector 200 may use synchronous detection (i.e., using a process analogous to a lock- in amplifier) to detect conducting body 222. Synchronous detection ensures substantially high rejection of interference and gives a high signal to noise ratio (SNR) thereby significantly reducing the probability of false alarm low.

Conducting body 222 may disrupt electric field 206 as shown in Fig. 2B, when a user 102 enters electric field 206. Conducting body 222 may be grounded 210 and may shunt a portion of the electric field 206. The predetermined proximity of electric field proximity detector 200 (and a headset 100 that incorporates/includes electric field proximity detector 200) may be determined based on the strength and direction of electric field 206 as well as a sensitivity of a measurement component of electric field proximity detector 200 and predetermined thresholds for disruption of electric field 206. Electric field proximity detector 200 may include a mixer (not shown) with one or more associated operational (OP) amplifiers with set voltage thresholds. Alternatively, electric field proximity detector 200 may include a direct connection of output to MCU 106. MCU 106 may include one or more analog/digital (A/D) converters. Electric field proximity detector 200 may detect the detectable object (conducting body 222) at detection distances that are dependent on the size of the antennas 204. For example, two half circle antennas 204 with dimensions of 20 x 20 millimeters (mm) may detect a detectable object at up to 80 mm distance at a transmitted frequency of 100 kHz.

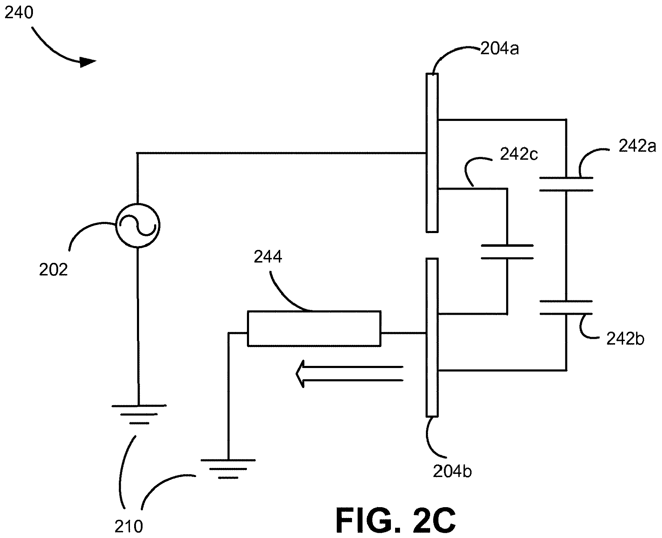

Fig. 2C illustrates a circuit 240 representing an interaction between a conducting body (e.g., conducting body 222 described above with respect to Fig. 2B) and electric field 206 generated by electric field proximity detector 200. Similarly as shown in Figs. 2A-2B, electric field proximity detector 200 shown in Fig. 2C includes voltage source 202, an antenna 204, and electric field 206. In addition, capacitance 242a-242c, and amplifier 244 are shown. The output of electric field proximity detector 200 may be a direct current (DC) level output. The voltage output of electric field proximity detector 200 may be proportional to the distance to conducting body 222. The voltage output may be connected to an analog comparator for a simple threshold triggering or an analog to digital (AD) converter in instances and/or applications in which the distance of conducting body 222 from headset 100 is used. Electric field proximity detector 200 may transmit minimal or no power because antenna 204 may be substantially smaller than a wavelength of voltage source 202. Electric field proximity detector 200 may consume substantially minimal power. Electric field proximity detector 200 may use a transmitting frequency of the order of 100 kilohertz (kHz).

Electric field proximity detector 200 may be substantially insensitive (i.e., minimally sensitive) to false detection of detectable objects. More particularly, electric field proximity detector 200 may requires a human body or a similar conducting body having comparable mass and conducting properties in order to detect a conducting body 222 as the detectable object (i.e., determine that a detectable body is within the predetermined proximity). For example, electric field proximity detector 200 may be substantially unlikely to register that a detectable body is in the predetermined proximity when headset 100 is put in a bag, pocket, etc. Electric field proximity detector 200 may be minimally susceptible to losses in sensitivity, degeneration or interference caused by dirt, nonconductive headwear (i.e., a baseball cap or hat), or hair that may cover headset 100. Proximity detectors 104-a and 104-b may be able to detect the detectable object without actual physical contact with the detectable object.

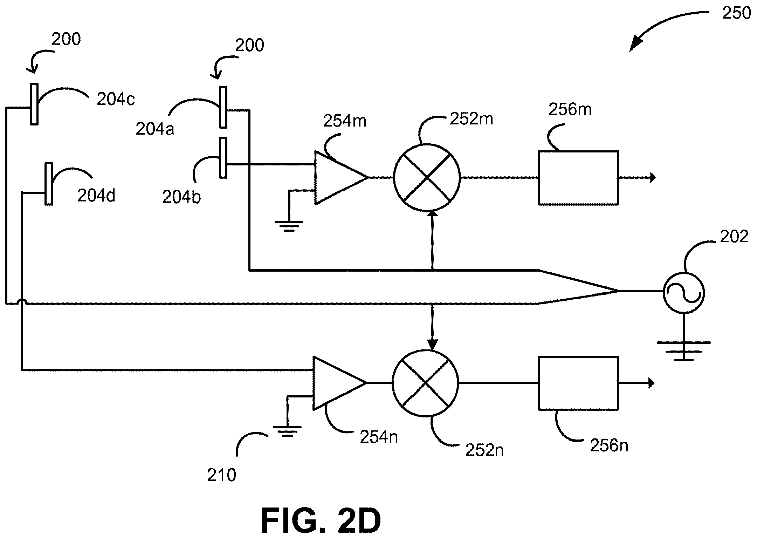

Fig. 2D shows a circuit 250 that may be used to implement synchronized electric field proximity detection in a pair of headphones, such as headphones 100-L and 100-r. Circuit 250 may be a synchronized detector. As shown in Fig. 2D circuit 250 includes a pair of electric field proximity detectors 200 that receive a same voltage source 202. Each electric field proximity detector 200 includes a pair of electrodes 204 (204a-204b and 204c-204d), a mixer 252 (mixer 252m and 252n respectively), an amplifier (amplifier 254m and 254n respectively), and a low pass filter (low pass filter 256m and 256n respectively).

The pair of electric field proximity detectors 200 may be implemented in each headphone 100-L and 100-R to enable detection of instances in which user 102 removes one of headphones 100-L and 100-R. Headset 100 may perform a predetermined function, such as pausing music from a user device (not shown) based on this input.

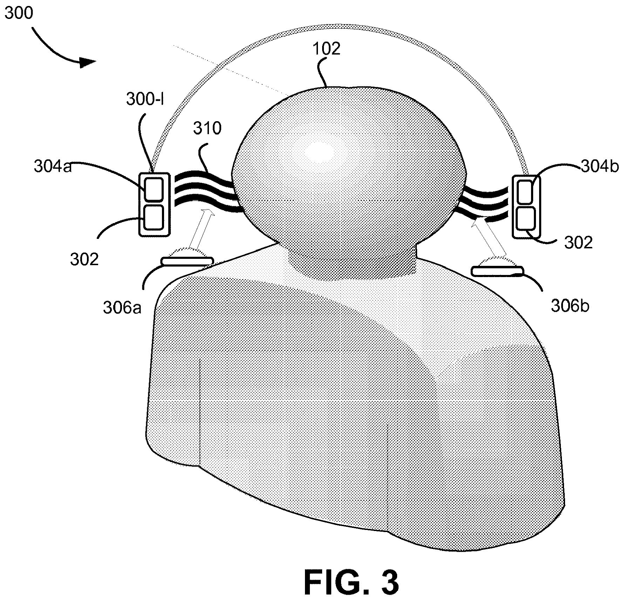

Fig 3 illustrates concepts of long-wave infrared detection of the detectable object using a headset 300 that includes a long wave IR proximity detector 302. Headset 300 may be an implementation of headset 100 and long wave IR proximity detector 304 may be an implementation of proximity detector 104. As shown in Fig.3, long wave IR proximity detector 302 includes long-wave IR sensors 306a-306b that may be mounted inside headset 100 shells or outside in the headset 100 frame based on design considerations. Long-wave IR sensors 306 may also include amplifiers 304a-304b. The configuration of components of headset 300 illustrated in Fig. 3 is for illustrative purposes only. Although not shown, headset 300 may include additional, fewer and/or different components than those depicted in Fig. 3.

As shown in Fig. 3, user 102 may have a black body radiating property and emit black body radiation 310 (i.e., the characteristic property of user 102 with regard to the detection of user 102, who is the detectable object, may be the black body radiating property). Long-wave IR sensors 306 may be calibrated to detect black body radiation 310 in an area overlapping the predetermined proximity when user 102 puts on headset 300. For example, sensors 306a-306b may be directed towards an area in which the detectable object may be positioned/placed when headset 300 is in operation (i.e., sensors may be directed towards a part of the head of user 102 such an ear or the forehead of user 102). Long-wave IR sensors 306 may be thermopile detectors that may be positioned/placed on headset 300, for instance on an ear case, hoop or other part of headset 300 that may be directed towards user 102, such as at the ears 102l-102r with a substantially clear line of sight. Long-wave IR sensors 306 may use a wavelength of the order of five to ten microns. Long-wave IR sensors 306 may be implemented for absolute temperature measurement using a thermopile detector in which the output is proportional to incident radiation.

According to an embodiment, long-wave IR sensors 306 may change resistance in proportion to the incident black body radiation 310 from user 102. Alternatively, long-wave IR sensors may produce a voltage proportional to the incident black body radiation. Long wave IR proximity detector 302 may transform the change in resistance into an output voltage using an amplifier and determine whether the detectable object is within the predetermined proximity based on this output voltage. Long wave IR proximity detector 302 may communicate with an MCU, for instance MCU 106, using an interrupt request (IRQ) or analog/digital conversion in instances in which an actual distance from user 102 to headset 100 is a consideration. MCU 106 may change headset 300 from the active state to the standby state and vice versa based on this determination controlling the power according to the headset on/off state.

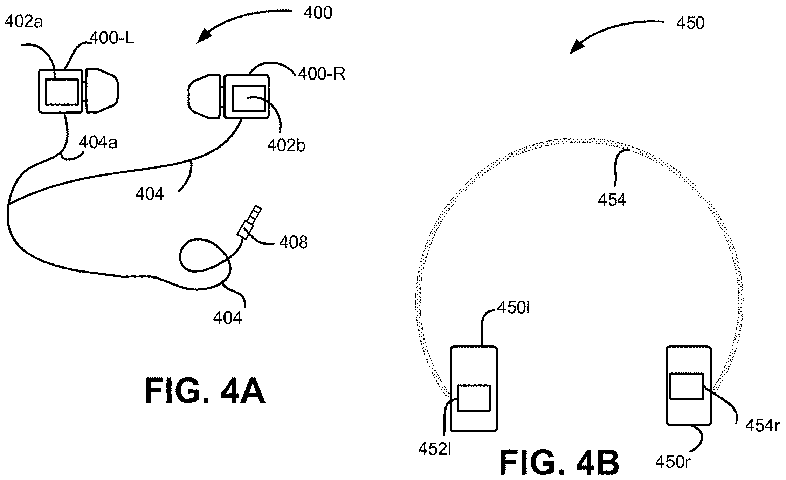

Fig. 4A illustrates an in-ear design headset 400 consistent with embodiments described herein. More specifically, Fig. 4A shows an overview of a pair 400 of in-ear style headphones 400-1 and 400-r (sometimes referred to as "earbuds"). The configuration of components of headset 400 illustrated in Fig. 4A is for illustrative purposes only. Although not shown, headset 400 may include additional, fewer and/or different components than those depicted in Fig. 4A.

As shown in Fig. 4A, in-ear design headset 400 may include wired headphones 400-1 and 400-r and may have a small form factor with plastic buds or similar design suitable for fitting into the ears 102-1 and 102r of user 102. In-ear design headset 400 may include an input/output jack 408 that connects to headphones 400-1 and 400-r via wires 404a and 404b, which may be integrated into a single wire.

404. In-ear design headset 400 may include proximity detectors 402a-402b. Audio signals may be received from a user device (not shown) via input/output jack 408. Further, in-ear design headset 400 may include additional audio processing logic may configured to dynamically change functions of headset 400 in headphones 100-L and 100-R based on a change in the state of headset 400.

Fig. 4B illustrates an on ear design headset 450 consistent with embodiments described herein. More specifically, Fig. 4B shows an overview of a pair 450 of on-ear style headphones 450-1 and 450-r (sometimes referred to as "padded ear shell" headphones). The configuration of components of headset 450 illustrated in Fig. 4B is for illustrative purposes only. Although not shown, headset 450 may include additional, fewer and/or different components than those depicted in Fig. 4B.

As shown in Fig. 4B, on-ear design 450 would typically have bigger form factor with a padded ear shell and a hoop running either around or on top of the head. In either implementation of headset 100 (i.e., in-ear design headset 400 or on- ear design headset 450 shown in Fig. 4A and Fig. 4B, respectively), headset 100 may be implemented with low power consumption (i.e., power consumption of the order of uA) that may consume significant less power in comparison of a configuration of a headset in which all electronic blocks are active at all times or require manual shut down. Implementations of headset 400 and 450 may be guided by particular size and form restrictions for each solution. Both implementations may have use detection of the detectable object to control power consumption for headset 100 and associated systems and devices.

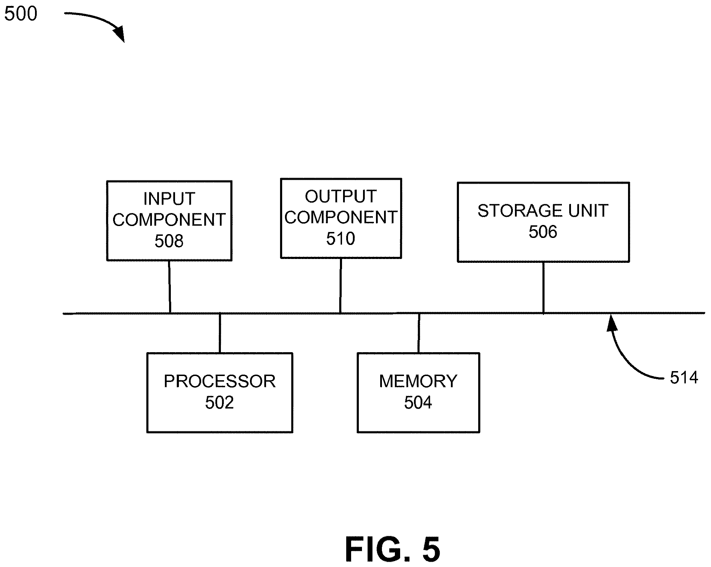

Fig. 5 is a block diagram of exemplary components of device 500. Device 500 may represent any one of headset 100, 300, 400, or 450, and/or components of the headsets, such as MCU 106, or proximity detectors 104, or 200.

As shown in Fig. 5, device 500 may include a processor 502, memory 504, storage unit 506, input component 508, output component 510, and communication path 514.

Processor 502 may include a processor, a microprocessor, an Application Specific Integrated Circuit (ASIC), a Field Programmable Gate Array (FPGA), and/or other processing logic (e.g., audio/video processor) capable of processing information and/or controlling device 500.

Memory/storage 504 may include static memory, such as read only memory (ROM), and/or dynamic memory, such as random access memory (RAM), or onboard cache, for storing data and machine-readable instructions. Memory/storage unit 504 may also include storage devices, such as a floppy disk, CD ROM, CD read/write (R/W) disc, hard disk drive (HDD), flash memory, as well as other types of storage devices.

Input component 508 and output component 510 may include a display screen, a keyboard, a mouse, a speaker, a microphone, a Digital Video Disk (DVD) writer, a DVD reader, Universal Serial Bus (USB) port, and/or other types of components for converting physical events or phenomena to and/or from digital signals that pertain to device 500. Communication path 514 may provide an interface through which components of device 500 can communicate with one another.

In different implementations, device 500 may include additional, fewer, or different components than the ones illustrated in Fig. 5. For example, device 500 may include one or more network interfaces, such as interfaces for receiving and sending information from/to other devices.

Depending on the implementation, device 500 may include additional, fewer, different, or a different arrangement of functional components than those illustrated in Fig. 5. For example, device 500 may include an operating system, applications, device drivers, graphical user interface components, communication software, digital sound processor (DSP) components, etc. In another example, depending on the implementation, control program 500 may be part of a program or an application, such as a game, document editor/generator, utility program, multimedia program, video player, music player, or another type of application.

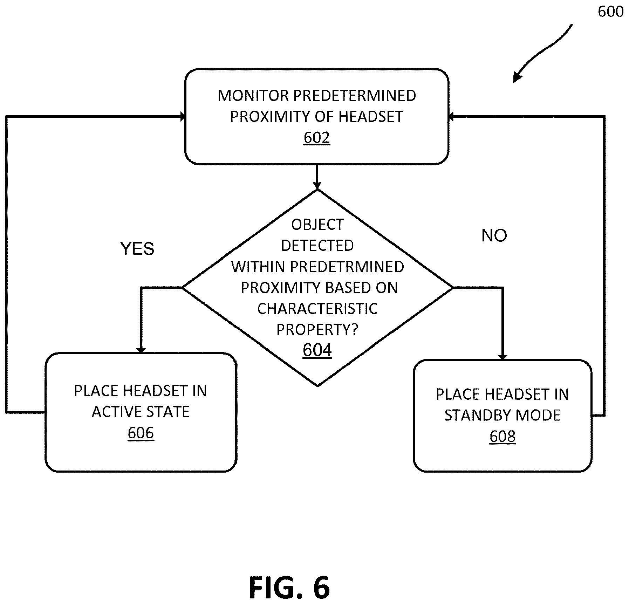

Fig. 6 is a flowchart of an exemplary process 600for controlling power in a headset in a manner consistent with implementations described herein. Process 600 may execute in a proximity detector 104 that is incorporated or integrated into a headset 100. It should be apparent that the process discussed below with respect to Fig. 6 represents a generalized illustration and that other elements may be added or existing elements may be removed, modified or rearranged without departing from the scope of process 600.

Proximity detector 104 may monitor a predetermined proximity of headset 100 (block 602). The predetermined proximity includes an area where a user of the headset is positioned during operation of the headset.

At block 604, proximity detector 104 may determine whether a detectable object is within the predetermined proximity of the headset based on a characteristic property of the detectable object. The characteristic property of the detectable object may be one of a black body emitting property and a conducting property. The detectable object may be user 102, i.e., proximity detector 104 may be calibrated/programmed to monitor for persons that put on headset 100.

At block 606, proximity detector 104 may place the headset into an active state when it is determined that the detectable object is within the predetermined proximity (block 604 = yes). The active state may be a state in which headset 100 consumes substantially more power than power consumed by headset 100 in the standby state. Placing headset 100 into the active state may be either activating headset 100 to the active state (when headset 100 is in the standby state) or maintaining headset 100 in the active state (when headset 100 is in the active state) based on a previous state of headset 100.

At block 608, proximity detector 104 may place headset 100 into a standby state when it is determined that the detectable object is not within the predetermined proximity (block 604 = no). Placing headset 100 into the standby state may be either deactivating headset 100 to the standby state (when headset 100 is in the active state) or maintaining headset 100 in the standby state (when headset 100 is in the standby state) based on a previous state of headset 100.

As described above, process 600 may repeat at each instant that a relation between headset 100 and user 102 changes.

The foregoing description of implementations provides illustration, but is not intended to be exhaustive or to limit the implementations to the precise form disclosed. Modifications and variations are possible in light of the above teachings or may be acquired from practice of the teachings.

In the above, while series of blocks have been described with regard to the exemplary processes, the order of the blocks may be modified in other implementations. In addition, non-dependent blocks may represent acts that can be performed in parallel to other blocks. Further, depending on the implementation of functional components, some of the blocks may be omitted from one or more processes.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software.

No element, act, or instruction used in the present application should be construed as critical or essential to the implementations described herein unless explicitly described as such. Also, as used herein, the article "a" is intended to include one or more items. Further, the phrase "based on" is intended to mean "based, at least in part, on" unless explicitly stated otherwise.

Summarizing, above the following examples have been described:
1. Example: A method for controlling power in a headset, comprising: monitoring a predetermined proximity of the headset, wherein the predetermined proximity includes an area within which a user is positioned during operation of the headset; determining whether a detectable object is within the predetermined proximity of the headset based on a characteristic property of the detectable object, wherein the characteristic property of the detectable object is one of a black body emitting property or a conducting property; placing the headset into an active state when it is determined that the detectable object is within the predetermined proximity; and placing the headset into a standby state when it is determined that the detectable object is not within the predetermined proximity.
2. Example: The method of example 1, wherein the active state comprises a state in which the headset consumes substantially more power than power consumed by the headset in the standby state and wherein placing the headset into the active state comprises one of activating the headset in the active state or maintaining the headset in the active state and placing the headset into the standby state comprises one of deactivating the headset to the standby state or maintaining the headset in the standby state.
3. Example: The method of example 1, wherein placing the headset into the active state comprises activating at least one of a communication process, an application specific signal process, a power handling process, an audio effects process, and a sensor process.
4. Example: The method of example 1, wherein placing the headset into the active state includes one of activating or deactivating an associated user device.
5. Example: The method of example 1, wherein the characteristic property of the detectable object is the conducting property and determining whether a detectable object is within a predetermined proximity of the headset further comprises:
   generating an electric field that substantially overlaps the predetermined proximity; and
   detecting that the detectable object is within the predetermined proximity based on an interaction of the detectable object with the electric field.
6. Example: The method of example 5, wherein detecting that the detectable object is within the predetermined proximity further comprises: comparing a voltage generated by the electric field with a threshold voltage to detect the detectable object.
7. Example: The method of example 5, wherein detecting that the detectable object is within the predetermined proximity further comprises: measuring a voltage generated by the electric field using an analog to digital converter; and determining a distance from the headset to the detachable object based on the measured voltage.
8. Example: The method of example 5, wherein detecting that the detectable object is within the predetermined proximity further comprises: detecting that the detectable object is within the predetermined proximity using synchronous detection.
9. Example: The method of example 1, wherein the characteristic property of the detectable object is the black body emitting property and determining whether a detectable object is within a predetermined proximity of the headset further comprises:
   monitoring the predetermined proximity for black body radiation; and detecting that the detectable object is within the predetermined proximity based on the black body radiation.
10. Example: The method of example 9, wherein the predetermined proximity is monitored for black body radiation with a wavelength substantially of an order of 5 microns to 10 microns.
11. Example: A headset device, comprising: a component to monitor a predetermined proximity of the headset device, wherein the predetermined proximity includes an area within which a user is positioned during operation of the headset; a memory to store a plurality of instructions; and a processor configured to execute instructions in the memory to: monitor the predetermined proximity of the headset; determine whether a detectable object is within the predetermined proximity of the headset based on a characteristic property of the detectable object, wherein the characteristic property of the detectable object is one of a black body emitting property or a conducting property; place the headset into an active state when it is determined that the detectable object is within the predetermined proximity; and place the headset into a standby state when it is determined that the detectable object is not within the predetermined proximity.
12. Example: The headset device of example 11, wherein when placing the headset into the active state, the processor is further configured to: activate at least one of a communication process, an application specific signal process, a power handling process, an audio effects process, and a sensor process.
13. Example: The headset device of example 11, wherein when placing the headset into the active state, the processor is further configured to: activate or deactivate an associated user device.
14. Example: The headset device of example 11, wherein the characteristic property of the detectable object is the conducting property and wherein when determining whether a detectable object is within a predetermined proximity of the headset, the processor is further configured to: generate an electric field that substantially overlaps the predetermined proximity; and detect that the detectable object is within the predetermined proximity based on an interaction of the detectable object with the electric field.
15. Example: The headset device of example 14, wherein when detecting that the detectable object is within the predetermined proximity, the processor is further configured to: compare a voltage generated by the electric field with a threshold voltage to detect the detectable object.
16. Example: The headset device of example 11, wherein the characteristic property of the detectable object is the black body emitting property and wherein when determining whether the detectable object is within the predetermined proximity of the headset, the processor is further configured to: monitor the predetermined proximity for black body radiation; and detect that the detectable object is within the predetermined proximity based on the black body radiation.
17. Example: The headset device of example 11, wherein the headset device comprises one of an on-ear design headset or an in-ear design headset.
18. Example: A computer-readable medium including instructions to be executed by a processor, the instructions including one or more instructions, when executed by the processor, for causing the processor to: monitor a predetermined proximity of the headset, wherein the predetermined proximity includes an area within which a user is positioned during operation of the headset; determine whether a detectable object is within the predetermined proximity of the headset based on a characteristic property of the detectable object, wherein the characteristic property of the detectable object is one of a black body emitting property or a conducting property; place the headset into an active state when it is determined that the detectable object is within the predetermined proximity; and place the headset into a standby state when it is determined that the detectable object is not within the predetermined proximity.
19. Example: The computer-readable medium of example 18, wherein the characteristic property of the detectable object is the conducting property and wherein when determining whether the detectable object is within the predetermined proximity, the one or more instructions further includes instructions to: generate an electric field that substantially overlaps the predetermined proximity; and detect that the detectable object is within the predetermined proximity based on an interaction of the detectable object with the electric field.
20. Example: The computer-readable medium of example 18, wherein the characteristic property of the detectable object is the black body emitting property and wherein when determining whether the detectable object is within the predetermined proximity, the one or more instructions further includes instructions to: monitor the predetermined proximity for black body radiation; and detect that the detectable object is within the predetermined proximity based on the black body radiation.

## Claims

1. A method for controlling a user device associated with a headset (100, 300, 400, 450, 500), the comprising:
monitoring (602) a predetermined proximity of the headset (100, 300, 400, 450, 500), wherein the predetermined proximity includes an area within which a user is positioned during operation of the headset;
determining (604) whether a detectable object is within the predetermined proximity of the headset based on a characteristic property of the detectable object, wherein the characteristic property of the detectable object is one of a black body emitting property or a conducting property;
placing (606) the headset into an active state when it is determined that the detectable object is within the predetermined proximity;
placing (608) the headset into a standby state when it is determined that the detectable object is not within the predetermined proximity; and
activating or deactivating a particular function of the user device, when the headset changes between the standby state (608) and the active state (606).

2. The method of claim 1, wherein the particular function of the user device is a speaker mode of the user device.

3. The method of claim 1 or 2, wherein placing (608) the headset (100, 300, 400, 450, 500) into the standby state includes activating the particular user function of the user device.

4. The method of any one of the preceding claims, wherein placing (606) the headset (100, 300, 400, 450, 500) into the active state includes deactivating the particular user function of the user device.

5. The method of any one of the preceding claims, wherein placing the headset (100, 300, 400, 450, 500) into the active state or into the standby state comprises activating an application specific signal process, wherein the application specific signal process is configured to activate or deactivate the particular function of the user device.

6. The method of claim 5, wherein the application specific signal process comprises Bluetooth wireless communication.

7. The method of any one of the preceding claims, wherein activating or deactivating the particular function of the user device comprises transmitting a signal, to the user device, indicating that the headset is placed into active state or into standby state.

8. The method of any one of the preceding claims, wherein the characteristic property of the detectable object is the conducting property and determining whether a detectable object is within a predetermined proximity of the headset (100, 300, 400, 450, 500) further comprises: generating an electric field (206) that substantially overlaps the predetermined proximity; and detecting that the detectable object is within the predetermined proximity based on an interaction of the detectable object with the electric field.

9. The method of claim 8, wherein detecting that the detectable object is within the predetermined proximity further comprises: comparing a voltage generated by the electric field (206) with a threshold voltage to detect the detectable object.

10. The method of claim 8 or 9, wherein detecting that the detectable object is within the predetermined proximity further comprises: measuring a voltage generated by the electric field (206) using an analog to digital converter; and
determining a distance from the headset to the detectable object based on the measured voltage.

11. The method of any one of the claims 8 to 10, wherein detecting that the detectable object is within the predetermined proximity further comprises:
detecting that the detectable object is within the predetermined proximity using synchronous detection.

12. A headset device (100, 300, 400, 450, 500), comprising:
a component to monitor a predetermined proximity of the headset device (100, 300, 400, 450, 500), wherein the predetermined proximity includes an area within which a user is positioned during operation of the headset;
a memory to store a plurality of instructions; and
a processor configured to execute instructions in the memory to:
monitor the predetermined proximity of the headset;
determine whether a detectable object is within the predetermined proximity of the headset based on a characteristic property of the detectable object, wherein the characteristic property of the detectable object is one of a black body emitting property or a conducting property;
place the headset into an active state when it is determined that the detectable object is within the predetermined proximity;
place the headset into a standby state when it is determined that the detectable object is not within the predetermined proximity; and
activate or deactivate a particular function of a user device, which is associated with the headset device, when the headset device changes between the standby state and the active state.

13. The headset device (100, 300, 400, 450, 500) of claim 11, being configured to perform the method of any one of the claims 1 to 11.

14. A system comprising the headset device (100, 300, 400, 450, 500) of claim 12 or 13 and the user device, wherein the user device comprises a speaker and is configured to operate in a speaker mode, which can be activated and deactivated.

15. A computer-readable medium including instructions to be executed by a processor (502), the instructions including one or more instructions, when executed by the processor, for causing the processor to:
monitor (602) a predetermined proximity of the headset (100, 300, 400, 450, 500), wherein the predetermined proximity includes an area within which a user (102) is positioned during operation of the headset;
determine (604) whether a detectable object is within the predetermined proximity of the headset based on a characteristic property of the detectable object, wherein the characteristic property of the detectable object is one of a black body emitting property or a conducting property;
place (606) the headset into an active state when it is determined that the detectable object is within the predetermined proximity;
place (608) the headset into a standby state when it is determined that the detectable object is not within the predetermined proximity; and
activate or deactivate a particular function of a user device, which is associated with the headset (100, 300, 400, 450, 500), when the headset changes between the standby state (608) and the active state (606).
